# FASCICULE DE BREVET EUROPEEN

(11) **EP 2 000 250 B1**
(45) Date de publication et mention de la délivrance du brevet: **17.03.2010**
(21) Numéro de dépôt: 08290507.6
(22) Date de dépôt: 02.06.2008
(51) Int. Cl.: B23K 26/40, B31D 1/02, D06Q 1/00

(54) **Procédé de découpe au laser d'un motif pour décoration d'articles textiles**
Verfahren zum Laserschneiden von Dekorationsmotiven für Textilartikel
Method for laser cutting pattern for decorating textile items

(30) Priorité: 05.06.2007 FR 0704023
(43) Date de publication de la demande: 10.12.2008
(73) Titulaire: Société d'Enduction et de Flockage, 53000 Laval (FR)
(72) Inventeur: Lion, Jean-Pierre, 53000 Laval (FR)
(74) Mandataire: Laget, Jean-Loup

(56) Documents cités:
- WO-A-99/39862
- FR-A- 2 769 541

## Description

Le domaine de la présente invention est celui de la décoration de pièces textiles, en particulier par un procédé de flockage.

Le document FR-A-2 769 541 décrit un procédé d'impression de motifs multicolores.

La décoration de vêtements ou d'articles textiles peut se faire par impression directe ou par pose d'un motif rapporté, ce motif pouvant être appliqué sur le vêtement par couture ou par pose thermique. Dans ce second cas, un polymère thermo-réactif ("hot-melt") est activé par la chaleur, et sa fusion permet l'accrochage du motif décoratif dans les fibres du support textile.

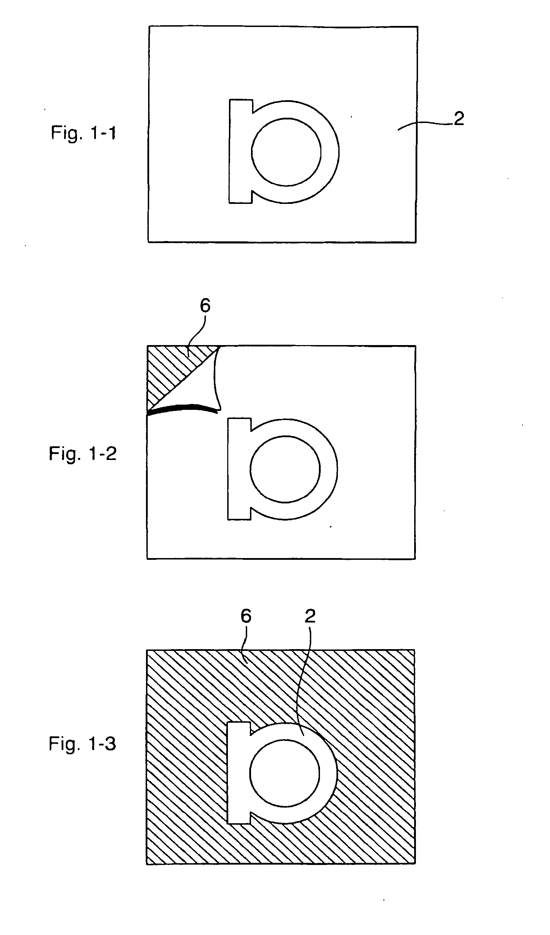

L'apparition de machines de découpe numériques ("plotter"), pilotées par ordinateur, a permis la réalisation très précise de motifs décoratifs thermocollants, comme illustrée sur la figure 1, avec la succession des étapes suivantes :
- un film thermocollant, positionné sur un support temporaire, est placé dans une machine de découpe,
- la machine de découpe, pilotée par ordinateur, est réglée de façon à découper l'épaisseur du film thermocollant sans entamer le support temporaire: elle reproduit sur le film thermocollant le modèle défini par l'ordinateur,
- seule une partie du film thermocollant découpé devant être appliquée sur le vêtement, il convient d'éliminer l'excès de film qui n'appartient pas au modèle destiné à être appliqué,
- l'élimination de la partie du film extérieure au motif découpé ne présente aucune difficulté : elle peut se faire de façon manuelle, en soulevant un coin du film thermocollant et en le décollant du support temporaire.

Sur la figure 1 on voit l'étape 1-1 de l'art antérieur, où un film décoratif à envers thermocollant est fixé sur un support temporaire anti-adhérent 6 constitué par un film plastique ou un support papier: le film thermocollant 2 a été découpé selon le tracé d'une lettre "a", coupée en image miroir de façon à se retrouver dans le bon sens après application sur le vêtement. Lors de l'étape 1-2 on voit le décollement ("échenillage") du film thermocollant, la lettre découpée "a" restant fixée sur le support.

Cette méthode est bien adaptée lorsque les figures représentées ne présentent pas de zone délimitée par une ligne de découpe fermée. Dans ce cas, comme on le voit lors de l'étape 1-3, la partie inutile qui se trouve à l'intérieur des motifs découpés n'est pas enlevée. Il est alors nécessaire de mettre en place une opération, généralement manuelle, d'échenillage de la partie centrale : un opérateur enlève à l'aide d'une petite pince, élément par élément, les parties intérieures du modèle découpé que la première opération n'a pas su éliminer. La longueur et la difficulté de cette seconde opération est fonction du modèle découpé, et on comprend qu'un texte, un sigle ou un logo comportant de nombreuses parties intérieures conduit rapidement à une impossibilité pratique; ceci est d'autant plus vrai si ces parties sont de petites tailles et si la quantité de modèles commandés est élevée.

La présente invention a pour but de remédier à ces inconvénients en proposant une méthode d'échenillage adaptée à toutes les formes de découpes du film thermocollant. Elle décrit ainsi un procédé de fabrication qui permet de réaliser en continu l'élimination des parties intérieures d'un motif découpé, sans intervention manuelle, même dans le cas d'éléments extrêmement petits et très fins. Ce nouveau procédé permet de faire passer à l'échelle industrielle la réalisation en continu, par découpe numérique, de motifs thermocollants ajourés, destinés à la décoration de vêtements, réalisation qui n'était jusqu'alors possible que par des procédés d'impression de type sérigraphie.

A cet effet, l'invention a pour objet un procédé de découpe au laser d'un complexe pour son application en décoration sur un matériau textile, ledit complexe comprenant au moins un film thermocollant destiné à être rattaché par sa face supérieure directement ou indirectement à un second support temporaire autocollant caractérisé en ce que ledit complexe comprend une couche intermédiaire entre ledit film thermocollant et ledit second support temporaire autocollant et en ce que ledit procédé comprend les étapes suivantes :
a) mise en place sous le complexe d'un premier support temporaire,
b) mise en place du second support temporaire autocollant sur la couche intermédiaire,
c) retrait du premier support temporaire et du film thermocollant à l'exception de ses parties reproduisant le motif à appliquer.
et en ce qu'il comprend aussi :
une étape de découpe au laser du complexe sur toute l'épaisseur du film thermocollant, le long de lignes de découpe reproduisant les contours du motif à appliquer,
et une étape d'élimination par gravure laser de la partie de la couche intermédiaire et/ou du film thermocollant située à l'intérieur de lignes de découpe fermées et ne faisant pas partie du motif à appliquer.

Dans un premier mode de réalisation l'étape de découpe au laser s'effectue à partir de la face supérieure et intervient après l'étape de mise en place du premier support temporaire; l'étape d'élimination porte sur la couche intermédiaire pour au moins une partie de son épaisseur et intervient à la suite de l'étape de découpe au laser.

Dans un second mode de réalisation l'étape de découpe au laser s'effectue à partir de la face inférieure et intervient après l'étape de mise en place du second support temporaire; l'étape d'élimination porte sur la totalité de l'épaisseur du film thermocollant et intervient après l'étape de retrait du premier support temporaire.

L'étape d'élimination par gravure laser des parties situées à l'intérieur des lignes de découpe fermées permet de retirer facilement les zones inutiles.

De façon préférentielle le motif à appliquer ou les lignes de découpe sont préalablement définies par une opération d'impression de ladite couche intermédiaire, telle qu'une impression multicolore par jet d'encre adaptée à la nature de la surface imprimée.

Cette opération préalable permet de reproduire tout modèle de dessin ou de photographie sur la couche intermédiaire, de définir avec précision les zones à découper et à graver et d'automatiser ce processus.

Avantageusement le premier support temporaire est un support anti-adhérent, tel qu'un film plastique ou un papier, sur lequel le film thermocollant est fixé de façon provisoire, ce qui permet d'entraîner facilement avec lui les zones inutiles du motif découpé.

Dans un mode particulier de réalisation la couche intermédiaire est constituée de fibres flocks fusibles par laser.

Les fibres flocks sont avantageusement fixées au film thermocollant par un adhésif de flocage.

Dans un mode particulier de réalisation le film thermocollant est séparé de la couche intermédiaire par une couche barrière.

Ceci évite la possible migration de colorants sublimables contenus dans le tissu sur lequel le motif décoratif sera appliqué.

De façon préférentielle le premier support temporaire est un film traité anti-adhérent dont la base est en polyester, en polypropylène ou en papier.

Dans un mode particulier de réalisation le film thermocollant est un film hot-melt à base de copolyamide, copolyester ou de polyuréthanes thermoplastiques.

Avantageusement les fibres flocks sont en rayonne-viscose, en polyamide ou constituées de micro-fibres polyester.

De façon préférentielle l'adhésif de flocage est obtenu par formulation d'une résine polymère à base d'acrylique, de PVC ou de polyuréthanes.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue du processus d'échenillage selon l'art antérieur, faisant suite à la découpe au laser d'un film thermocollant destiné à une application en décoration sur un matériau textile;
- les figures 2 à 7 présentent en plan et en coupe les produits obtenus à l'issue de chacune des étapes d'un processus d'échenillage selon un premier mode de réalisation de l'invention.

Les figures 8 et 9, en association avec la figure 2, présentent en plan et en coupe les produits obtenus à l'issue de chacune des étapes d'un processus d'échenillage selon un second mode de réalisation de l'invention

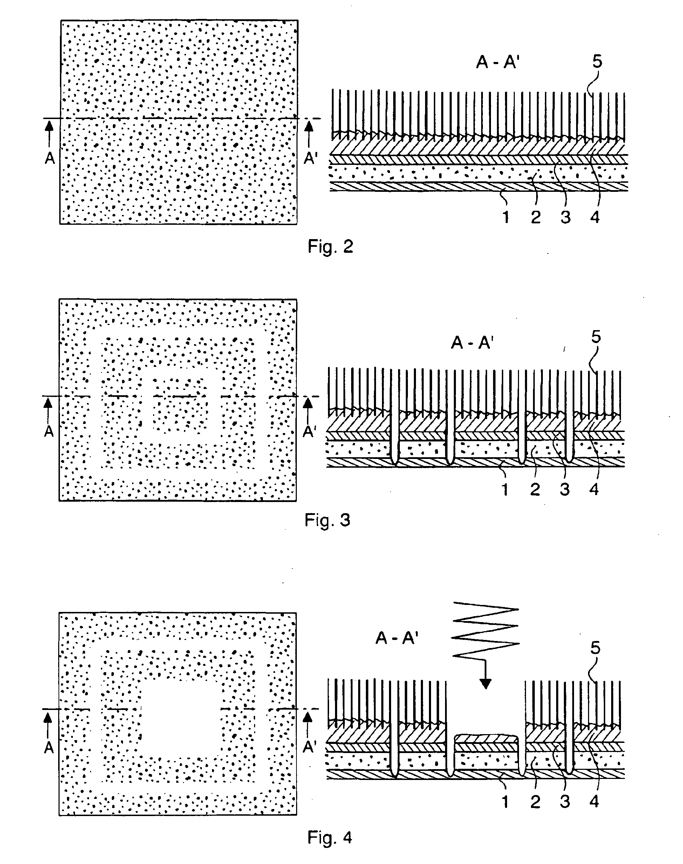

En se référant aux figures 2 à 7, on voit un premier support temporaire 1 sur lequel sont déposés successivement, et par convention dans un sens défini comme de bas en haut, un film thermocollant 2, une couche barrière 3, un adhésif de flocage 4 et une couche intermédiaire 5 représentée sous la forme de fibres flocks. L'ensemble constitué par ces éléments, référencés 2 à 5, constitue un complexe dans lequel sera découpé un motif décoratif destiné à être appliqué en décoration sur un matériau textile. Il est généralement réalisé par des procédés connus d'enduction, de co-extrusion et de flockage. Dans un mode particulier de réalisation le premier support temporaire 1 est un support anti-adhérent sur lequel vient se fixer de façon provisoire le film thermocollant.

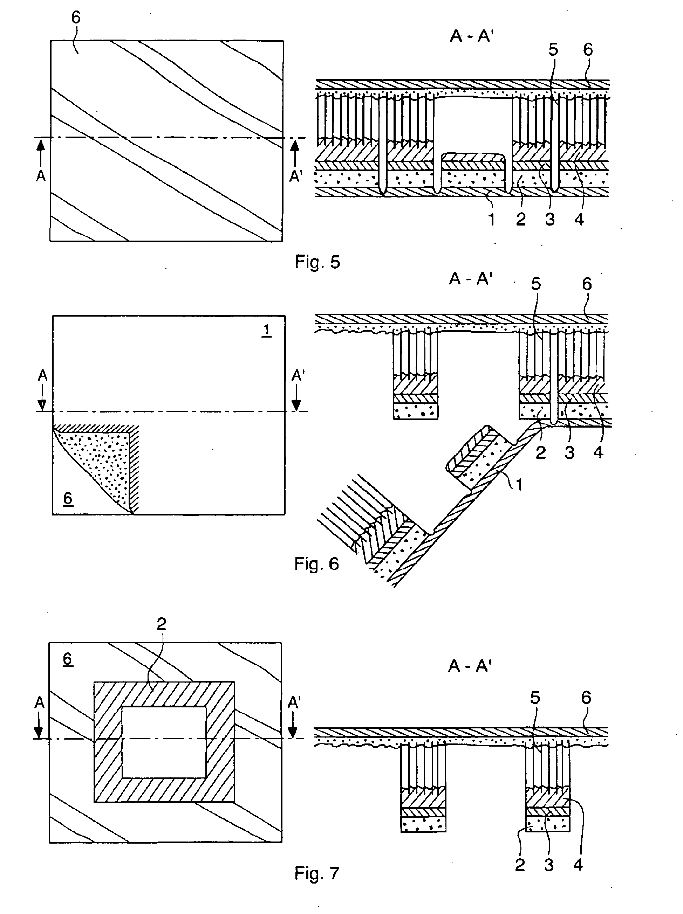

Sur les figures 5 à 7, le complexe, découpé et gravé, est recouvert d'un second support temporaire constitué par un film autocollant 6.

Le premier support temporaire 1 peut être un film plastique (polyester ou polypropylène, par exemple) ou un papier traité anti-adhérent; son poids surfacique peut varier entre 50 et 200 g/m2.

Le film thermocollant 2 est généralement un film hot-melt à base de copolyamide (coPA), copolyester (coPES) ou de polyuréthanes thermoplastiques (TPU), ce film étant soit extrudé, soit obtenu par fusion d'une couche de poudre calibrée; son poids surfacique est généralement compris entre 50 et 100 g/m2.

La couche barrière 3 protégé la surface imprimée de la remontée par migration de colorants sublimables contenus dans le tissu sur lequel le motif décoratif sera appliqué; cette couche est avantageusement d'une composition chimique différente de celles qui l'entourent et contiendra des charges inertes et opacifiantes; elle résulte d'un dépôt de matière de 50 à 150 g/m2, fait en une ou plusieurs fois, en fonction de l'effet barrière désiré.

L'adhésif de flockage 4 est obtenu par formulation d'une résine polymère à base d'acrylique, de PVC ou plus préférablement de polyuréthanes (en dispersion aqueuse ou en version high-solid), de façon à obtenir un film souple, élastique, résistant au lavage et au nettoyage à sec.

Les fibres flocks 5 sont en rayonne-viscose, en polyamide ou encore constituées de micro-fibres polyester; elles peuvent être imprimées par tout procédé connu, le présent brevet préconisant l'impression directe par le procédé jet d'encre, à l'aide d'encres pigmentaires ou Eco-Solvent (cas de fibres en rayonne-viscose) ou d'encres sublimables (cas de micro-fibres en polyester).

Dans certaines réalisations le composant 3 peut être omis. Cette configuration conduit à un motif décoratif ne présentant pas de propriétés "barrière" contre la migration de colorants sublimables. Une absence de fibres flocks peut également être envisagée. Cela conduit à un motif, tel qu'un film plastique, présentant une surface lisse. Ce film plastique à surface lisse pourra être rendu imprimable par jet d'encre, par simple enduction d'une couche d'accrochage composée d'une résine polymère adaptée (dispersion aqueuse d'une résine acrylique, styrène-butadiène, alcool polyvinylique ou polyvinyl-pyrrolidone additionnée ou non de pigments de type silice).

On va maintenant décrire les étapes du processus de réalisation d'un complexe selon le premier mode de réalisation de l'invention, en partant d'un complexe classique, telles que représentées sur les figures 2 à 7.

La découpe classique, assistée par ordinateur, des complexes destinés à la décoration textile s'effectue le plus souvent à l'aide de machines de découpe mécaniques, équipées d'un couteau. La qualité de découpe est obtenue en jouant sur le profil de la lame, son degré d'enfoncement dans la matière à découper et la pression exercée au moment de la découpe. Ce procédé permet une découpe précise et très satisfaisante de contours, saisis sous forme vectorielle par l'ordinateur à l'aide d'un logiciel graphique.

Elle peut également être pratiquée par faisceau laser et c'est dans ce cadre que se situe l'invention revendiquée. Les différentes actions pour découper ou graver une matière sont pilotées par la longueur d'onde du faisceau laser, par le réglage de la forme et de la puissance du faisceau, et par la vitesse de déplacement. Dans le cas d'une découpe, le faisceau est dirigé par ordinateur selon un tracé vectoriel défini. La puissance et la vitesse du faisceau sont réglées de façon à découper la totalité du complexe, sans traverser complètement le premier support temporaire, comme le montre la figure 3. Le faisceau présente préférentiellement un diamètre de l'ordre de 100 microns, ce qui assure une découpe fine, d'une très grande précision.
Selon un mode préféré de l'invention, le complexe est préalablement imprimé, par différentes techniques : sérigraphie, sublimation ou autre, et la découpe réalisée par le faisceau laser s'effectue en se repérant sur le tracé du modèle imprimé. Ce repérage est généralement obtenu par un système de détection optique, qui vient identifier au démarrage de l'opération de découpe la position exacte d'un repère imprimé. Ce système permet ainsi d'imprimer une image donnée, puis de venir découper de façon précise ses différents contours à l'aide du faisceau laser.

L'étape suivante, représentée sur la figure 4, constitue un aspect essentiel de l'invention. Elle fait appel à la possibilité offerte par un faisceau laser de creuser une matière en effectuant, à très grande vitesse, un balayage très fin sur une zone parfaitement définie. Le réglage de la puissance du faisceau, de sa dimension et de la finesse du balayage permet d'ajuster très précisément la profondeur de gravure.
Dans le cas de l'invention, le faisceau laser est réglé de façon à éliminer ponctuellement par gravure la couche intermédiaire 5 et une grande partie de la couche d'adhésif de flocage 4. Cette opération donne naissance à des zones creusées, parfaitement positionnées par rapport au motif découpé. Il est essentiel que la profondeur des zones creusées soit supérieure à l'épaisseur de la couche du second support temporaire autocollant 6, qui sera mis en place comme cela est décrit dans l'étape suivante. Ainsi, lors de la séparation des supports illustrée par la figure 6, la partie creusée du complexe ne sera plus rattachée à ce second support temporaire autocollant.

Dans ladite étape suivante, représentée à la figure 5, on vient recouvrir la surface du complexe d'un second support temporaire 6 constitué par un film autocollant dont la couche adhésive vient s'accrocher aux parties du complexe qui apparaissent en relief. La rigidité choisie pour le second support temporaire autocollant 6 est telle qu'il ne vient pas au contact des zones creusées, et son pouvoir adhésif est suffisamment faible pour constituer un assemblage provisoire.

Ce second support temporaire autocollant 6 est avantageusement constitué d'un support transparent en polyester, recouvert d'une fine couche d'une résine autocollante à faible pouvoir adhésif. Cette résine doit présenter une bonne résistance à la température, et est préférentiellement choisie parmi les polymères acryliques ou les silicones. Le second support temporaire autocollant 6 est appliqué par pression sur la surface découpée du complexe, cette opération étant réalisée en continu sur une machine de type calandre à cylindres, à pression réglable; une pression uniforme, voisine de 10 à 20 kg/cm2, permet d'obtenir la force d'accrochage recherchée.

L'opération suivante, illustrée par la figure 6, consiste à séparer les deux films précédemment imbriqués. Cette opération de séparation se fait avantageusement en continu, dans la foulée de l'étape précédente : le second support temporaire autocollant 6 est appliqué sur la surface du complexe découpé, et les deux éléments sont immédiatement séparés et individuellement enroulés. Dans cette opération de séparation, le premier support temporaire 1 entraîne avec lui toute la partie extérieure aux motifs découpés, qui est arrachée du second support temporaire autocollant par la force de décollement, ainsi que toutes les parties gravées, qui suivent le premier support temporaire sur lequel elles sont avantageusement fixées. Seules restent sur le second support temporaire autocollant 6 les parties qui appartiennent au motif décoratif à appliquer. Cette opération de séparation permet donc un échenillage complet et continu de l'ensemble des parties inutiles du complexe.

La figure 7 montre le résultat obtenu : le motif décoratif découpé selon le dessin choisi reste fixé sur le second support temporaire autocollant 6, le film thermocollant 2 étant tourné vers l'extérieur. L'ensemble de ces opérations a bien permis de fabriquer un motif thermocollant, présenté sur un second support temporaire autocollant 6, dont les parties intérieures inutiles ont été évidées en continu.

Ce motif décoratif peut maintenant être appliqué sur un support textile à l'aide d'une presse électrique; le temps, la température et la pression d'application dépendront de la nature du film thermocollant 2 choisi. Dans cette dernière phase, le film thermocollant 2 se fixe sur le textile avec lequel il a été mis en contact, et le second support temporaire autocollant 6 est décollé après quelques secondes de refroidissement.

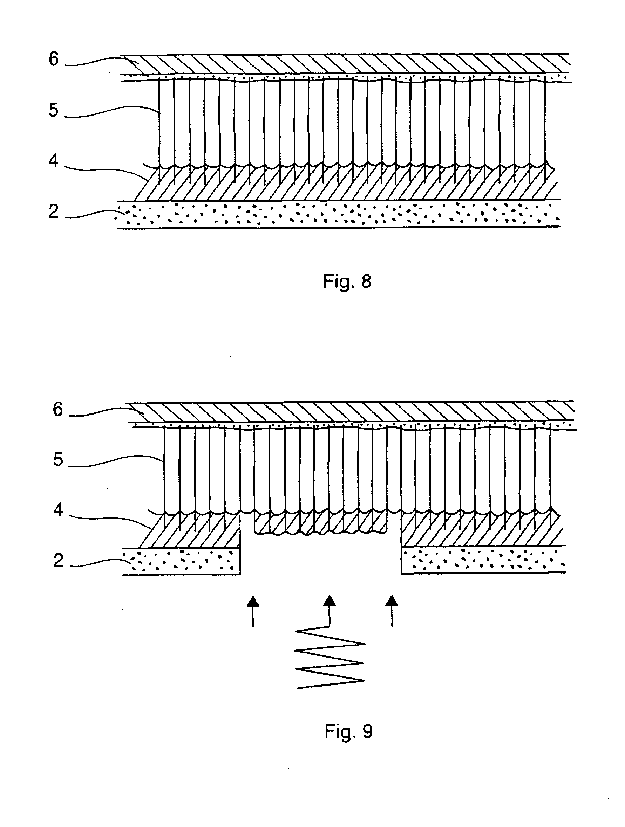

En se référant aux figures 2, 8 et 9 on va maintenant décrire un deuxième mode de réalisation. Les éléments identiques au premier mode de réalisation sont désignés par le même chiffre de référence et ne sont pas décrits à nouveau. Ici, le complexe est immédiatement recouvert d'un second support temporaire 6 pour donner un produit du type de celui illustré sur la figure 8.

Puis s'ensuit une étape de découpe au laser du complexe à partir de la face inférieure, le long des lignes du motif en traversant tout le motif à l'exception du second support temporaire. L'étape suivante consiste à retirer la première couche temporaire 1 ainsi que les parties du film thermocollant situées à l'extérieur du motif à appliquer.

La dernière étape, illustrée sur la figure 9, consiste à graver par laser les parties inutiles du film thermocollant qui se trouvent à l'intérieur des lignes de découpe fermées et à les éliminer sur toute leur épaisseur. Le complexe est alors prêt à être livré pour une application sur un matériau textile. Lors de celle-ci le film thermocollant 2 se fixe sur le matériau alors que les parties situées à l'intérieur de lignes de découpe fermées et ne faisant pas partie du motif à appliquer ne s'y fixent pas puisqu'elles ne possèdent plus de film thermocollant. Elles peuvent alors être éliminées sans difficulté après cette opération d'application.

## Revendications

1. Procédé de découpe au laser d'un complexe pour son application en décoration sur un matériau textile, ledit complexe comprenant au moins un film thermocollant (2) destiné à être rattaché par sa face supérieure directement ou indirectement à un second support temporaire autocollant (6) **caractérisé en ce que** ledit complexe comprend une couche intermédiaire (5) entre ledit film thermocollant et ledit second support temporaire autocollant et **en ce que** ledit procédé comprend les étapes suivantes :
a) mise en place sous le complexe d'un premier support temporaire (1),
b) mise en place du second support temporaire autocollant (6) sur la couche intermédiaire (5),
c) retrait du premier support temporaire (1) et du film thermocollant (2) à l'exception de ses parties reproduisant le motif à appliquer,
et **en ce qu'**il comprend aussi :
une étape de découpe au laser du complexe sur toute l'épaisseur du film thermocollant (2), le long de lignes de découpe reproduisant les contours du motif à appliquer,
et une étape d'élimination par gravure laser de la partie de la couche intermédiaire (5) et/ou du film thermocollant (2) située à l'intérieur de lignes de découpe fermées et ne faisant pas partie du motif à appliquer.

2. Procédé de découpe au laser d'un complexe selon la revendication 1 dans lequel l'étape de découpe au laser s'effectue à partir de la face supérieure et intervient après l'étape de mise en place du premier support temporaire et dans lequel l'étape d'élimination porte sur la couche intermédiaire (5) pour au moins une partie de son épaisseur et intervient à la suite de l'étape de découpe au laser.

3. Procédé de découpe au laser d'un complexe selon la revendication 1 dans lequel l'étape de découpe au laser s'effectue à partir de la face inférieure et intervient après l'étape de mise en place du second support temporaire et dans lequel l'étape d'élimination porte sur la totalité de l'épaisseur du film thermocollant (2) et intervient après l'étape de retrait du premier support temporaire.

4. Procédé de découpe au laser d'un complexe selon l'une des revendications 1 à 3 dans lequel le motif à appliquer ou les lignes de découpe sont préalablement définies par une opération d'impression sur ladite couche intermédiaire (5), telle qu'une impression jet d'encre adaptée à la nature de la surface imprimée.

5. Procédé de découpe au laser d'un complexe selon l'une des revendications 1 à 4 dans lequel le premier support temporaire (1) est un support anti-adhérent.

6. Procédé de découpe au laser d'un complexe selon l'une des revendications 1 à 5 dans lequel la couche intermédiaire (5) est constituée de fibres flocks fusibles par laser.

7. Procédé de découpe au laser d'un complexe selon la revendication 6 dans lequel les fibres flocks sont fixées au film thermocollant (2) par un adhésif de flocage (4).

8. Procédé de découpe au laser d'un complexe selon l'une des revendications 1 à 7 dans lequel le film thermocollant (2) est séparé de la couche intermédiaire (5) par une couche barrière (3).

9. Procédé de découpe au laser d'un complexe selon l'une des revendications 1 à 8 dans lequel le premier support temporaire (1) est un film traité anti-adhérent dont la base est en polyester, en polypropylène ou en papier.

10. Procédé de découpe au laser d'un complexe selon l'une des revendications 1 à 9 dans lequel le film thermocollant (2) est un film hotmelt à base de copolyamide, copolyester ou de polyuréthanes thermoplastiques.

11. Procédé de découpe au laser d'un complexe selon l'une des revendications 6 ou 7 dans lequel les fibres flocks sont en rayonne-viscose, en polyamide ou constituées de micro-fibres polyester.

12. Procédé de découpe au laser d'un complexe selon l'une des revendications 7 ou 11 dans lequel l'adhésif de flocage est obtenu par formulation d'une résine polymère à base d'acrylique, de PVC ou de polyuréthanes.

## Claims

1. A method for laser-cutting a complex for its application to decoration on a textile material, said complex comprising at least one thermo-adhesive film (2) intended to be joined through its upper face either directly or indirectly to a second self-adhesive temporary support (6) **characterized in that** said complex comprises an intermediate layer (5) between said thermo-adhesive film and said second self-adhesive temporary support and **in that** said method comprises the following steps:
a) placing a first temporary support (1) under the complex,
b) placing the second self-adhesive temporary support (6) on the intermediate layer (5),
c) removing the first temporary support (1) and the thermo-adhesive film (2) except for its portions reproducing the pattern to be applied,
and **in that** it also comprises:
a step for cutting out with a laser the complex over the whole thickness of the thermo-adhesive film (2), along cutting lines reproducing the contours of the pattern to be applied,
and a step for removing by laser etching the portion of the intermediate layer (5) and/or of the thermo-adhesive film (2) located inside the closed cutting lines and not belonging to the pattern to be applied.

2. The method for laser-cutting a complex according to claim 1, wherein the laser-cutting step is carried out from the upper face and occurs after the step of placing the first temporary support and wherein the removal step deals with the intermediate layer (5) for at least one portion of its thickness and occurs following the laser-cutting step.

3. The method for laser-cutting a complex according to claim 1, wherein the laser-cutting step is carried out from the lower face and occurs after the step of placing the second temporary support and wherein the removal step deals with the totality of the thickness of the thermo-adhesive film (2) and occurs after the step for removing the first temporary support.

4. The method for laser-cutting a complex according to any of claims 1 to 3, wherein the pattern to be applied or the cutting lines are defined beforehand by a printing operation on said intermediate layer (5), such as ink jet printing adapted to the nature of the printed surface.

5. The method for laser-cutting a complex according to any of claims 1 to 4, wherein the first temporary support (1) is an anti-adhesive support.

6. The method for laser-cutting a complex according to any of claims 1 to 5, wherein the intermediate layer (5) consists of laser-meltable flock fibers.

7. The method for laser-cutting a complex according to claim 6, wherein the flock fibers are attached to the thermo-adhesive film (2) by a flocking adhesive (4).

8. The method for laser-cutting a complex according to any of claims 1 to 7, wherein the thermo-adhesive film (2) is separated from the intermediate layer (5) by a barrier layer (3).

9. The method for laser-cutting a complex according to any of claims 1 to 8, wherein the first temporary support (1) is an anti-adhesive treated film, the base of which is in polyester, polypropylene or paper.

10. The method for laser-cutting a complex according to any of claims 1 to 9, wherein the thermo-adhesive film (2) is a hot melt film based on copolyamide, copolyester or thermoplastic polyurethanes.

11. The method for laser-cutting a complex according to any of claims 6 or 7, wherein the flock fibers are in rayon-viscose, polyamide or consist of polyester microfibres.

12. The method for laser-cutting a complex according to any of claims 7 or 11, wherein the flocking adhesive is obtained by formulating a polymer resin based on acrylic, PVC or polyurethanes.

## Patentansprüche

1. Laserschneidverfahren eines Komplexes zur Anwendung als Dekoration auf einem textilen Material, wobei der Komplex mindestens eine Heißsiegelfolie (2) umfasst, die dazu bestimmt ist, mit ihrer oberen Seite direkt oder indirekt mit einer zweiten kurzzeitigen selbstklebenden Unterlage (6) verbunden zu sein, **dadurch gekennzeichnet, dass** der Komplex eine Zwischenschicht (5) zwischen der Heißsiegelfolie und der zweiten kurzzeitigen selbstklebenden Unterlage umfasst und dadurch, dass das Verfahren die folgenden Schritte umfasst:
a) Platzierung einer ersten kurzzeitigen Unterlage (1) unter dem Komplex,
b) Platzierung der zweiten kurzzeitigen selbstklebenden Unterlage (6) auf der Zwischenschicht (5),
c) Abnehmen der ersten kurzzeitigen Unterlage (1) und der Heißsiegelfolie (2) mit Ausnahme ihrer Abschnitte, die das aufzutragende Motiv wiedergeben,
und dadurch, dass es ebenfalls umfasst:
einen Schritt des Laserschneidens des Komplexes über die gesamte Dicke der Heißsiegelfolie (2) entlang von Schnittlinien, die die Konturen des aufzutragenden Motivs wiedergeben,
und einen Schritt des Entfernens des Abschnitts der Zwischenschicht (5) und/oder der Heißsiegelfolie (2), der sich innerhalb der geschlossenen Schnittlinien befindet und kein Bestandteil des aufzutragenden Motivs ist, durch Lasergravur.

2. Laserschneidverfahren eines Komplexes nach Anspruch 1, bei dem der Schritt des Laserschneidens von der oberen Seite aus durchgeführt wird und nach dem Schritt der Platzierung der ersten kurzzeitigen Unterlage erfolgt und bei dem sich der Schritt des Entfernens auf die Zwischenschicht (5) bezieht für mindestens einen Abschnitt ihrer Dicke und nach dem Schritt der Lasergravur erfolgt.

3. Laserschneidverfahren eines Komplexes nach Anspruch 1, bei dem der Schritt des Laserschneidens von der unteren Seite aus durchgeführt wird und nach dem Schritt der Platzierung der zweiten kurzzeitigen Unterlage erfolgt und bei dem sich der Schritt des Entfernens auf die gesamte Dicke der Heißsiegelfolie (2) bezieht und nach dem Schritt des Entfernens der ersten kurzzeitigen Unterlage erfolgt.

4. Laserschneidverfahren eines Komplexes nach einem der Ansprüche 1 bis 3, bei dem das aufzutragende Motiv oder die Schnittlinien zuvor durch einen Druckvorgang, wie zum Beispiel einen Tintenstrahldruck, der an die Art der bedruckten Oberfläche angepasst ist, auf die Zwischenschicht (5) definiert sind.

5. Laserschneidverfahren eines Komplexes nach einem der Ansprüche 1 bis 4, bei dem die erste kurzzeitige Unterlage (1) eine Antihaftunterlage ist.

6. Laserschneidverfahren eines Komplexes nach einem der Ansprüche 1 bis 5, bei dem die Zwischenschicht (5) aus durch Laser schmelzbaren Faserflocken besteht.

7. Laserschneidverfahren eines Komplexes nach Anspruch 6, bei dem die F a serflocken an der Heißsiegelfolie (2) durch ein Beflockungshaftmittel (4) befestigt sind.

8. Laserschneidverfahren eines Komplexes nach einem der Ansprüche 1 bis 7, bei dem die Heißsiegelfolie (2) von der Zwischenschicht (5) durch eine Barriereschicht (3) getrennt ist.

9. Laserschneidverfahren eines Komplexes nach einem der Ansprüche 1 bis 8, bei dem die erste kurzzeitige Unterlage (1) eine Folie mit Antihaftbehandlung ist, deren Basis aus Polyester, Polypropylen oder aus Papier ist.

10. Laserschneidverfahren eines Komplexes nach einem der Ansprüche 1 bis 9, bei dem die Heißsiegelfolie (2) eine Hotmelt-Folie auf der Basis von Copolyamid, Copolyester oder thermoplastischer Polyurethane ist.

11. Laserschneidverfahren eines Komplexes nach einem der Ansprüche 6 oder 7, bei dem die Faserflocken aus Kunstseidenviskos, Polyamid sind oder aus Polyester-Mikrofasern bestehen.

12. Laserschneidverfahren eines Komplexes nach einem der Ansprüche 7 oder 11, bei dem das Beflockungshaftmittel durch Formulierung eines Polymerharzes auf Acrylbasis, von PVC oder Polyurethanen hergestellt ist.
